# FASCICULE DE BREVET EUROPEEN

(11) **EP 3 146 205 B1**
(45) Date de publication et mention de la délivrance du brevet: **15.07.2020**
(21) Numéro de dépôt: 15728057.9
(22) Date de dépôt: 13.05.2015
(51) Int. Cl.: F03H 1/00, F02K 9/62, F02K 9/76, F02K 9/97, B64G 1/40

(54) **MOTEUR POUR ENGIN SPATIAL, ET ENGIN SPATIAL COMPRENANT UN TEL MOTEUR**
MOTOR FÜR EIN RAUMFAHRZEUG UND RAUMFAHRZEUG MIT SOLCH EINEM MOTOR
ENGINE FOR A SPACECRAFT, AND SPACECRAFT COMPRISING SUCH AN ENGINE

(30) Priorité: 21.05.2014 FR 1454553
(43) Date de publication de la demande: 29.03.2017
(73) Titulaire: SAFRAN AIRCRAFT ENGINES, 75015 Paris (FR)
(72) Inventeur: ZURBACH, Stéphan Joseph, 27200 Vernon (FR); MARCHANDISE, Frédéric Raphaël Jean, 27200 Vernon (FR)
(74) Mandataire: Cabinet Beau de Loménie
(86) Numéro de dépôt international: PCT/FR2015/051258
(87) Numéro de publication internationale: WO 2015/177438

(56) Documents cités:
- FR-A1- 2 986 213
- FR-A1- 2 986 577
- JP-A- H0 771 361
- US-A1- 2009 139 206

## Description

La présente invention concerne le domaine des moteurs pour engins spatiaux, en particulier les satellites.

Dans le cadre de certaines applications, il peut être souhaitable qu'un engin spatial présente deux modes de fonctionnement, soit à forte poussée, soit à forte impulsion spécifique. On peut citer deux exemples :
- La mise à poste et le maintien en orbite d'un satellite : la mise à poste d'un satellite nécessite une forte poussée afin de réaliser le transfert de celui-ci en orbite géostationnaire le plus rapidement possible ; et une propulsion avec une forte impulsion spécifique pour assurer le maintien en position du satellite pendant quinze ans.
- L'exploration : il pourrait être intéressant de disposer d'un propulseur permettant de décoller d'un objet céleste puis une fois dans l'espace, de mettre en œuvre une propulsion à forte impulsion spécifique.

De manière connue, la propulsion des satellites se fait généralement au moyen de deux technologies : la propulsion chimique et la propulsion électrique. Ces deux modes de propulsion ont chacun un domaine de fonctionnement spécifique dans un diagramme Impulsion spécifique (Isp)/Poussée : Schématiquement, la propulsion chimique permet d'atteindre de fortes poussées, mais l'impulsion spécifique reste limitée à 450 secondes. Inversement, la propulsion électrique permet d'atteindre de fortes impulsions spécifiques (2000 secondes), mais la poussée reste relativement faible.

Pour la propulsion des satellites, des propulseurs à effet Hall ont ainsi été utilisés dans des systèmes de commande d'orientation et/ou trajectoire (AOCS, de l'anglais « attitude and orbit control systems ») d'engins spatiaux et en particulier dans des AOCS de satellites géostationnaires. Les propulseurs à effet Hall permettent d'obtenir une impulsion spécifique (Iₛₚ) très élevée, de l'ordre de 1500 s, ce qui permet d'obtenir un pilotage précis de l'orientation et/ou la position de l'engin avec une masse et une complexité sensiblement moindres que les systèmes classiques utilisant des dispositifs inertiels, tels que, par exemple, des roues de réaction, en combinaison avec des propulseurs chimiques pour leur désaturation.

Toutefois, un propulseur à effet Hall offrant une haute impulsion spécifique ne peut normalement atteindre qu'une poussée très réduite. En conséquence, les AOCS incorporant des propulseurs à effet Hall sont classiquement complémentés par des propulseurs chimiques pour certaines manœuvres rapides, telles que le transfert d'orbite ou la mise en position. Ceci présente toutefois l'inconvénient d'augmenter le coût et la complexité globale de l'engin spatial, au détriment de sa fiabilité.

En conclusion, aucune des technologies disponibles (propulsion chimique, propulsion électrique) ne permet d'assurer une propulsion dans les deux domaines de fonctionnement envisagés, c'est-à-dire d'une part avec une forte poussée et une impulsion spécifique relativement faible, et d'autre part avec une forte impulsion spécifique et une poussée relativement faible

Le document JP H07 71361 A décrit un moteur pour engin spatial comportant un propulseur à effet Hall comprenant un canal annulaire d'éjection de particules, et un propulseur chimique comprenant une tuyère pour l'éjection de gaz de combustion, la tuyère étant disposée au centre du pôle interne du propulseur à effet Hall.

Aussi, un objectif de l'invention est de proposer un moteur pour engin spatial, pouvant assurer une propulsion dans ces deux domaines de fonctionnement, et cela sans rendre l'engin spatial excessivement lourd ou complexe.

Pour atteindre cet objectif, dans le cadre de l'invention il est proposé un moteur pour engin spatial comportant un propulseur chimique comprenant une tuyère pour l'éjection de gaz de combustion et un propulseur à effet Hall, le moteur étant agencé de telle sorte que ladite tuyère sert de canal d'éjection de particules éjectées par le propulseur à effet Hall lorsque celui-ci est en fonctionnement.

Ainsi, les deux technologies, à savoir la propulsion chimique et la propulsion électrique, sont intégrées au sein d'un même moteur. La mise en commun de certains moyens, notamment la tuyère, permet de rendre le moteur ainsi constitué relativement compact. Par suite, le moteur ainsi constitué reste relativement simple et peu coûteux, compte tenu de ses capacités de fonctionnement étendues grâce à la présence simultanée des deux propulseurs.

Dans un mode de réalisation, le propulseur à effet Hall comporte un circuit magnétique ; et dans une section suivant un demi-plan méridien, le circuit magnétique a une forme en fer à cheval avec un entrefer ouvert vers un côté aval de la tuyère, de telle sorte que le circuit magnétique est apte à générer un champ magnétique dans l'entrefer du circuit magnétique.

Le champ magnétique généré dans l'entrefer est de préférence sensiblement radial.

Les termes « amont » et « aval », dans le présent contexte, sont définis par rapport au sens de circulation normal du gaz propulsif dans la direction définie par l'axe central de la tuyère.

Le champ magnétique n'est pas nécessairement généré dans tout l'entrefer mais au moins dans une partie de celui-ci, située en général à l'extrémité aval de celui-ci. Un demi-plan méridien est un demi-plan délimité par un axe, en l'occurrence celui de la tuyère.

Dans ce mode de réalisation, l'obtention d'un champ magnétique radial dans la tuyère est rendue possible notamment par le fait que celle-ci, au lieu d'être creuse et vide comme la plupart des tuyères de propulseurs chimiques classiques, contient une portion du circuit magnétique. Cette portion intérieure du circuit magnétique est disposée globalement suivant l'axe de la tuyère et a une forme habituellement axisymétrique ou même de révolution autour de cet axe.

De préférence, les demi-plans méridiens dans lesquels la section du circuit magnétique présente une forme en fer à cheval sont répartis angulairement régulièrement autour de l'axe de la tuyère. Idéalement, le circuit magnétique présente une telle section dans tous les demi-plans méridiens, c'est-à-dire sur 360° autour de l'axe de la tuyère.

De préférence, en vue dans un demi-plan méridien, la chambre de combustion du propulseur chimique est agencée à l'intérieur du circuit magnétique.

Dans un mode de réalisation, la tuyère a une section axiale de forme annulaire, et passe à travers l'entrefer du circuit magnétique. L'entrefer a donc également une section axiale annulaire. Une section axiale désigne ici une section dans un plan perpendiculaire à l'axe de la tuyère.

Dans un mode de réalisation, le circuit magnétique comprend au moins un noyau magnétique extérieur situé autour de la tuyère ainsi qu'un noyau magnétique intérieur situé radialement à l'intérieur de la tuyère, et dans une section suivant un demi-plan méridien, des sections dudit noyau intérieur et dudit au moins un noyau extérieur forment les branches de ladite forme en fer à cheval.

Dans un mode de réalisation, le propulseur à effet Hall comporte en outre un circuit électrique apte à générer un champ électrique dans la tuyère, et le circuit électrique comporte une anode et une cathode disposées respectivement en amont et en aval de l'entrefer du circuit magnétique.

L'anode et la cathode peuvent être agencées de différentes manières.

Dans un mode de réalisation, l'anode comprend une portion de la tuyère. Elle peut par exemple constituer une partie de la paroi de la tuyère.

Dans un autre mode de réalisation, l'anode est disposée à l'intérieur de la tuyère.

Dans un mode de réalisation, et en particulier dans le mode de réalisation précédent, l'anode est isolée électriquement de la tuyère.

L'anode peut être disposée au voisinage d'injecteurs de fluides (injecteurs d'ergol(s)) dans la chambre de combustion, pour le propulseur chimique, et/ou au voisinage d'injecteurs de particules, pour le propulseur à effet Hall : c'est-à-dire en général tout-à-fait à l'extrémité amont du trajet de circulation des fluides dans le moteur.

Dans un mode de réalisation, au niveau axialement de l'entrefer, des parois intérieure et extérieure de la tuyère sont en matière électriquement isolante.

Ces parois intérieure et extérieure de la tuyère peuvent notamment être en matière céramique, laquelle est particulièrement appropriée par ses caractéristiques électriques, magnétiques et de résistance à l'érosion. Les parois isolantes peuvent par exemple être formées par deux bagues électriquement isolantes, qui délimitent ledit entrefer respectivement vers l'intérieur et vers l'extérieur.

Dans un mode de réalisation, la tuyère présente une chambre de combustion à une extrémité amont, reliée à un divergent à une extrémité aval.

Le propulseur à effet Hall comporte en outre au moins un injecteur de particules. Dans un mode de réalisation, cet injecteur de particules est apte à injecter des particules dans ladite chambre de combustion.

Les particules peuvent être un gaz inerte, par exemple du xénon.

La présente invention se rapporte aussi à un engin spatial incorporant au moins un moteur tel que décrit précédemment.

L'invention sera bien comprise et ses avantages apparaîtront mieux, à la lecture de la description détaillée qui suit, de deux modes de réalisation représentés à titre d'exemples non limitatifs. La description se réfère aux dessins annexés sur lesquels :
la figure 1 est une vue schématique partielle en coupe axiale d'un engin spatial comprenant un moteur suivant un premier mode de réalisation de l'invention.
La figure 2 est une vue schématique partielle en perspective du moteur illustré par la figure 1.

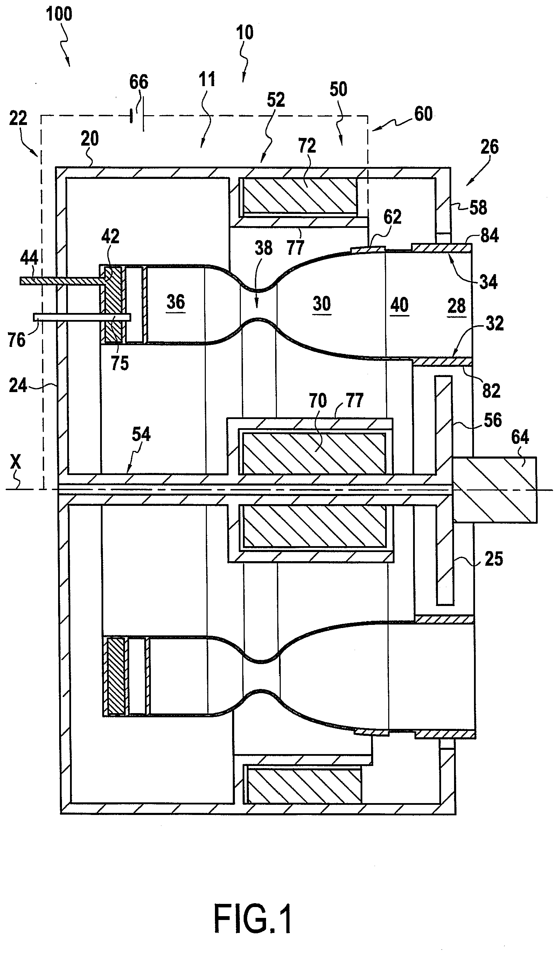

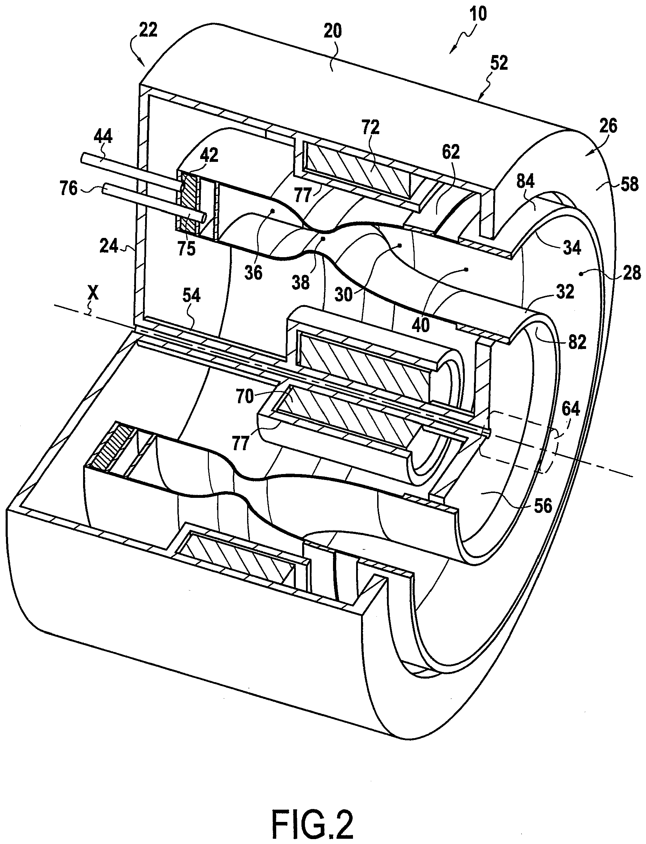

Les figures 1 et 2 représentent un moteur 10 selon l'invention. Celui-ci fait partie d'un engin spatial 100, en l'occurrence un satellite.

Ce moteur est un moteur hybride, capable de fonctionner en tant que propulseur chimique ou en tant que propulseur à effet Hall. Pour permettre son fonctionnement en tant que propulseur chimique ou propulseur à effet Hall, le moteur 10 est relié à des réservoirs d'ergols (non représentés ; il peut s'agir d'un ergol unique ou de deux ergols), ainsi qu'à un réservoir de gaz propulsif.

Ce moteur 10 a globalement une forme de révolution autour d'un axe X.

Il est agencé à l'intérieur d'un carter 20 de forme sensiblement cylindrique d'axe X. Une première extrémité axiale 22 de ce carter, sur un côté amont, est fermée par un fond sensiblement plat 24 perpendiculaire à l'axe X, alors que l'autre extrémité 26 (extrémité aval) est partiellement fermée par un fond sensiblement plat 25 également perpendiculaire à l'axe X. Le fond 25 est traversé par un large passage annulaire 28 d'éjection de gaz.

Le fond 25 a une forme générale de disque perpendiculaire à l'axe X. Du fait de la présence du passage annulaire 28, le fond 25 est constitué par un disque 56, et par une couronne annulaire 58 située radialement autour du passage annulaire 28. La couronne 58 est formée intégralement avec le carter 20.

Le moteur 10 comporte un propulseur chimique 11.

Ce propulseur chimique 11 comporte une tuyère 30 agencée à l'intérieur du carter 20.

La tuyère 30 est de forme générale annulaire autour de l'axe X. Plus généralement, la tuyère 30 peut également être axisymétrique. Toutefois, des formes non-axisymétriques peuvent être alternativement envisagées, par exemple, à section transversale ovale ou en hippodrome.

Que la section de la tuyère 30 ait ou non une forme de révolution ou axisymétrique, la tuyère 30 est de forme générale annulaire et comporte donc non seulement une paroi radialement externe 34, mais aussi une paroi radialement interne 32.

Ces parois sont concentriques autour de l'axe X.

La tuyère 30 est fermée du côté amont (à gauche sur la figure 1) et ouverte du côté aval.

De l'amont vers l'aval, la tuyère 30 présente tout d'abord une chambre de combustion 36, un convergent 38, puis un divergent 40. Ces éléments sont agencés pour permettre le fonctionnement du moteur 10 en tant que propulseur chimique 11.

Le propulseur chimique 11 comporte en outre des injecteurs 42 pour l'injection d'ergols. Ceux-ci sont agencés de manière à permettre l'injection d'ergols à l'extrémité amont de la chambre de combustion 36. Dans ce but, ils sont connectés à des sources d'ergols (non représentées) par un circuit d'alimentation 44.

Le moteur 10 comporte également un propulseur à effet Hall 50. Ce propulseur 50 comporte tout d'abord un circuit magnétique 52.

Ce circuit magnétique 52 comprend : le carter 20 lui-même, qui est réalisé en matériau ferromagnétique et forme ainsi un noyau magnétique externe ; les fonds 24 et 25, réalisés en matériau ferromagnétiques ; et un noyau magnétique central 54 en forme d'arbre, qui s'étend suivant l'axe X. Le disque 56 qui constitue une partie du fond 25 forme l'extrémité aval de l'arbre 54.

L'ensemble des éléments du circuit magnétique 52 indiqués précédemment sont agencés de manière à permettre une circulation sans pertes d'un champ magnétique à travers le circuit magnétique.

Pour protéger de l'usure la partie aval de la tuyère et contenir le nuage électronique formé dans l'entrefer du circuit magnétique, les parties axialement aval des parois 32 et 34 sont formées par des bagues en matériau céramique, référencées respectivement 82 et 84. Ces bagues sont positionnées au niveau de l'entrefer du circuit magnétique 52.

Le circuit magnétique 52 comporte en outre une bobine annulaire interne 70 et une bobine annulaire externe 72, qui servent à générer le champ magnétique nécessaire au fonctionnement du propulseur à effet Hall. Ces deux bobines sont formées de manière concentrique autour de l'axe X. La bobine 70 est formée autour de l'arbre 54 à l'intérieur (radialement) de la paroi 32 (c'est-à-dire, entre l'arbre 54 et la paroi 32). La bobine 72 est formée sur la face interne du carter cylindrique 20, et plus précisément entre cette face interne et la paroi externe 34 de la tuyère 30.

Axialement, les bobines 70 et 72 sont placées légèrement en aval du convergent 38 de la tuyère 30. De manière plus générale, ces bobines peuvent être axialement à un niveau quelconque sur l'axe X depuis la chambre de combustion, en amont, et jusqu'à une position immédiatement en amont des bagues céramiques 82 et 84, en aval.

Les bobines 70 et 72 sont alimentées par une source d'énergie électrique non représentée.

Dans le circuit magnétique 52, le noyau magnétique central 54 et le noyau magnétique externe (le carter 20) sont disposés de telle sorte que leurs polarités soient opposées.

Le circuit 52 est agencé de manière à générer un champ magnétique sensiblement radial dans le passage annulaire 28, qui constitue ainsi l'entrefer du circuit 52.

Dans d'autres modes de réalisation, le circuit magnétique peut avoir une structure différente de celle du circuit 52. L'important est que le circuit magnétique soit apte à générer un champ magnétique radial dans le passage d'éjection (ici, le passage 28) du propulseur à effet Hall.

L'intensité de ce champ magnétique décroit progressivement depuis le passage d'éjection (28) jusqu'au convergent 38 de la tuyère. Dans le mode de réalisation présenté, l'atténuation du champ magnétique (qui est maximal au niveau axial du passage 28) est provoquée par des écrans magnétiques interne et externe 77, de manière à réduire l'intensité du champ magnétique au voisinage de l'anode 62.

Ceux-ci sont formés respectivement sur la surface interne du carter 20 et sur la surface externe de l'arbre 54 et supportent mécaniquement les bobines 70 et 72.

Ces bobines 70 et 72 sont des bobines de forme sensiblement cylindriques, dont chacune des spires est sensiblement un cercle d'axe X. Dans un autre mode de réalisation, la bobine 72 peut être remplacée par une pluralité de bobines 72 identiques, chacune d'axe parallèle à l'axe X, les bobines 72 étant agencées de manière axisymétrique autour de la paroi externe 34 de la tuyère 30.

La partie aval de la tuyère 30 passe ou s'étend dans l'entrefer 28 du circuit 52.

Dans une section suivant un demi-plan méridien (Fig.1), le circuit magnétique a donc une forme en fer à cheval, avec un entrefer 28 ouvert vers le côté aval 26 de la tuyère 30. La forme de fer à cheval est constituée à partir du fond 24, par respectivement la section du carter 20, à l'extérieur, et la section du noyau central 54, à l'intérieur, qui forment les deux branches du fer à cheval.

Le propulseur 50 comprend aussi un circuit électrique 60. Ce circuit comprend une anode 62 située axialement environ à mi-hauteur du divergent 40, une cathode 64 située en aval de l'extrémité 26 de la tuyère 30, et une source de tension électrique 66 reliant l'anode 62 à la cathode 64.

De manière plus générale, l'anode 62 peut être axialement à un niveau quelconque sur l'axe X depuis la chambre de combustion, en amont, et jusqu'à une position immédiatement en amont des bagues céramiques 82 et 84, en aval.

L'anode 62 est constituée principalement par la paroi interne 34 de la tuyère 30 : elle est ainsi intégrée à la tuyère 30, tout en étant électriquement isolée de celle-ci.

La cathode 64 est fixée sur le disque 56, du côté extérieur c'est-à-dire en aval de l'arbre 54. Sur la figure 2, la cathode 64 est représentée en pointillés.

La cathode 64 est reliée à la source de tension électrique 66 par un câble circulant à l'intérieur de la paroi interne 32 de la tuyère 30.

Avantageusement, ce câble circule à l'intérieur de l'arbre 54.

Le propulseur comporte enfin, à l'extrémité amont de la tuyère 30, des injecteurs de gaz propulsif 75. Ceux-ci sont agencés de manière à permettre l'injection de gaz propulsif à l'extrémité amont de la chambre de combustion 36. Dans ce but, ils sont connectés à une source de gaz propulsif (non représentées) par un circuit d'injection 76. Le gaz propulsif peut être du xénon, qui présente les avantages d'un poids moléculaire élevé et un potentiel d'ionisation comparativement bas. Toutefois, comme dans d'autres propulseurs à effet Hall, une large variété de gaz propulsifs pourrait être utilisée.

Le moteur 10 présente deux modes principaux de fonctionnement, à savoir la propulsion électrique et la propulsion chimique.

En propulsion chimique, des ergols sont injectés dans la chambre de combustion 36 via les injecteurs 42. Ils sont brûlés dans cette chambre ; les gaz de combustion sont accélérés par le convergent 38 et le divergent 40 et éjectés à grande vitesse par l'ouverture aval 28 de la tuyère 30.

En propulsion par effet Hall, le moteur 10 fonctionne de la manière suivante.

Une tension électrique, typiquement de l'ordre de 150 à 800 V quand du xénon est utilisé comme gaz propulsif, est établie entre la cathode 64 en aval de l'extrémité aval de la tuyère 30 et l'anode 62. La cathode 64 commence alors à émettre des électrons, lesquels sont en grande partie piégés dans une enceinte magnétique formée par le champ magnétique créé par le circuit magnétique 52, adaptée aux performances souhaitées et au gaz propulsif utilisée, et qui est typiquement de l'ordre de 100 à 300 gauss avec du xénon comme gaz propulsif. Les électrons piégés dans cette enceinte magnétique vont ainsi former une grille cathodique virtuelle.

Des électrons hautement énergétiques (typiquement 10 à 40 eV) échappent à l'enceinte magnétique en direction de l'anode 62, tandis que du gaz propulsif est injecté dans la tuyère 30 à travers les injecteurs 75. Les impacts entre ces électrons et des atomes du gaz propulsif ionisent le gaz propulsif, lequel est alors accéléré vers l'extrémité aval 26 de la tuyère 30 par le champ électrique E généré par les bobines 70 et 72. Comme la masse des ions de gaz propulsif est de plusieurs ordres de magnitude plus élevée que celle des électrons, le champ magnétique ne confine pas ces ions de la même manière que les électrons. Le propulseur 50 génère donc un jet plasmique qui est éjecté à une vitesse extrêmement élevée à travers l'extrémité aval de la tuyère 30, ce qui produit une poussée sensiblement alignée avec l'axe central X.

Le fonctionnement du propulseur 50 est analogue à celui du propulseur décrit par le document US2003/0046921 A1.

Optionnellement, le moteur 10 pourrait comporter en outre, en aval des bagues 82 et 84, un tronçon de tuyère supplémentaire, afin de permettre une détente supplémentaire des gaz de combustion, lorsque le propulseur chimique est en fonctionnement.

La forme annulaire de la tuyère 30 permet donc d'utiliser celle-ci non seulement comme canal pour la combustion d'ergols et l'éjection des gaz de combustion, en propulsion chimique, mais aussi comme canal d'accélération d'ions, en fonctionnement électrique. En particulier, l'agencement du noyau magnétique 54 en forme d'arbre sur l'axe de la tuyère n'empêche nullement le fonctionnement du propulseur chimique 11. De plus, la position de la cathode en aval du fond 25 et protégée par l'extrémité de l'arbre 54 (la cathode 64 est en contact direct avec le centre du disque 56) permet que celle-ci ne soit pas touchée par le flux de gaz de combustion, auquel elle ne pourrait être exposée durablement.

Quoique la présente invention ait été décrite en se référant à un exemple de réalisation spécifique, il est évident que différentes modifications et changements peuvent être effectués sur cet exemple sans sortir de la portée générale de l'invention telle que définie par les revendications. En outre, des caractéristiques individuelles du mode de réalisation évoqué peuvent être combinées dans des modes de réalisation additionnels. Par conséquent, la description et les dessins doivent être considérés dans un sens illustratif plutôt que restrictif.

## Revendications

1. Moteur (10) pour engin spatial comportant un propulseur chimique (11) comprenant une tuyère (30) pour l'éjection de gaz de combustion ; et
un propulseur à effet Hall (50);
le moteur **se caractérisant en ce que** ladite tuyère sert de canal d'éjection de particules éjectées par le propulseur à effet Hall lorsque celui-ci est en fonctionnement.

2. Moteur selon la revendication 1, dans lequel
le propulseur à effet Hall (50) comporte un circuit magnétique (52) ;
et dans une section suivant un demi-plan méridien, le circuit magnétique a une forme en fer à cheval avec un entrefer (28) ouvert vers un côté aval (26) de la tuyère,
de telle sorte que le circuit magnétique est apte à générer un champ magnétique dans l'entrefer du circuit magnétique.

3. Moteur selon la revendication 2, **caractérisé en ce que**
la tuyère (30) a une section axiale de forme annulaire, et passe à travers l'entrefer du circuit magnétique (52).

4. Moteur selon la revendication 3, **caractérisé en ce que**
le circuit magnétique comprend au moins un noyau magnétique extérieur (20) situé autour de la tuyère (30) ainsi qu'un noyau magnétique intérieur (54) situé radialement à l'intérieur de la tuyère, et
dans une section suivant un demi-plan méridien, des sections dudit noyau intérieur et dudit au moins un noyau extérieur forment les branches de ladite forme en fer à cheval.

5. Moteur selon l'une quelconque des revendications 2 à 4, dans lequel
le propulseur à effet Hall comporte en outre un circuit électrique (60) apte à générer un champ électrique dans la tuyère, et
le circuit électrique comporte une anode (62) et une cathode (64) disposées respectivement en amont et en aval dudit entrefer (28).

6. Moteur selon la revendication 5, dans lequel l'anode (62) comprend une portion de la tuyère (30).

7. Moteur selon la revendication 5, dans lequel l'anode (62) est disposée dans la tuyère et isolée électriquement de celle-ci.

8. Moteur suivant l'une quelconque des revendications 2 à 7, **se caractérisant en ce qu'**au niveau axialement de l'entrefer (28), des parois intérieure et extérieure (32,34) de la tuyère sont en matière électriquement isolante, notamment en céramique.

9. Moteur suivant l'une quelconque des revendications 1 à 8, **se caractérisant en ce que** la tuyère présente une chambre de combustion (36) à une extrémité amont, reliée à un divergent (40) à une extrémité aval.

10. Moteur suivant la revendication 9, dont le propulseur à effet Hall comporte en outre au moins un injecteur de particules (72), apte à injecter des particules dans ladite chambre de combustion (36).

11. Engin spatial incorporant au moins un moteur (1) suivant l'une quelconque des revendications 1 à 10.

## Patentansprüche

1. Motor (10) für Raumfahrzeuge mit einem chemischen Antrieb (11) umfassend eine Düse (30) zum Ausstoßen von Verbrennungsgasen und einen Hall-Antrieb (50),
wobei der Motor **dadurch gekennzeichnet ist, dass** die besagte Düse als Ausstoßkanal für Partikel gilt, die vom Hall-Antrieb im Betrieb ausgestoßen werden.

2. Motor nach Anspruch 1, wobei
der Hall-Antrieb (50) über einen magnetischen Schaltkreis (52) verfügt und
der magnetische Schaltkreis in einem Schnitt gemäß einer Halbmeridianebene eine Hufeisenform mit einem offenen Spalt (28) zu einer stromabwärtigen Seite (26) der Düse hin aufweist,
sodass der magnetische Schaltkreis dazu konfiguriert ist, ein Magnetfeld im Spalt des magnetischen Schaltkreises zu erzeugen.

3. Motor nach Anspruch 2, **dadurch gekennzeichnet, dass**
die Düse (30) über eine ringförmige Axialsektion verfügt und durch den Spalt des magnetischen Schaltkreises (52) verläuft.

4. Motor nach Anspruch 3, **dadurch gekennzeichnet, dass**
der magnetische Schaltkreis mindestens einen äußeren Magnetkern (20), der um die Düse (30) liegt, sowie einen inneren Magnetkern (54) umfasst, der sich radial im Inneren der Düse befindet, und
in einem Schnitt gemäß einer Halbmeridianebene Abschnitte des besagten inneren Kerns und des mindestens eines äußeren Kerns die Enden dieser besagter Hufeisenform bilden.

5. Motor gemäß einem der Ansprüche 2 bis 4, in welchem
der Hall-Antrieb darüber hinaus über einen elektrischen Schaltkreis (60) verfügt, der ein Magnetfeld in der Düse erzeugen kann, und
der elektrische Schaltkreis über eine Anode (62) und eine Kathode (64) verfügt, die sich jeweils vor und nach dem besagten Spalt (28) befinden.

6. Motor nach Anspruch 5, in welchem die Anode (62) einen Teil der Düse (30) umfasst.

7. Motor nach Anspruch 5, in welchem die Anode (62) in der Düse sitzt und elektrisch von dieser isoliert ist.

8. Motor nach einem der Ansprüche 2 bis 7, **dadurch gekennzeichnet, dass** auf Axialebene des Spalts (28) die Innen- und Außenwand (32, 34) der Düse aus elektrisch isolierendem Material, nämlich aus Keramik bestehen.

9. Motor nach einem der Ansprüche 1 bis 8, **dadurch gekennzeichnet, dass** die Düse über eine Verbrennungskammer (36) an einem stromaufwärtigen Ende verfügt, die mit einem Diffusor (40) an einem stromabwärtigen Ende verbunden ist.

10. Motor nach Anspruch 9, dessen Hall-Antrieb darüber hinaus mindestens einen Partikelinjektor (72) umfasst, der Partikel in diese Verbrennungskammer (36) einbringen kann.

11. Raumfahrzeug mit mindestens einem Motor (1) nach einem der Ansprüche 1 bis 10.

## Claims

1. A space device engine (10) comprising a chemical thruster (11) having a nozzle (30) for ejecting combustion gas; and a Hall effect thruster (50); the engine being **characterized in that** said nozzle acts as an ejection channel for particles ejected by the Hall effect thruster when the Hall effect thruster is in operation.

2. An engine according to claim 1, wherein:
the Hall effect thruster (50) has a magnetic circuit (52); and
in a section on a meridian half-plane, the magnetic circuit is horseshoe-shaped with an airgap (28) open to the downstream end (26) of the nozzle;
in such a manner that the magnetic circuit is suitable for generating a magnetic field in the airgap of the magnetic circuit.

3. An engine according to claim 2, **characterized in that** the nozzle (30) has an axial section of annular shape, and passes through the airgap of the magnetic circuit (52) .

4. An engine according to claim 3, **characterized in that** the magnetic circuit has at least one outer magnetic core (20) situated around the nozzle (30) and an inner magnetic core (54) situated radially inside the nozzle, and in a section on a meridian half-plane, sections of said inner core and of said at least one outer core form branches of said horseshoe-shape.

5. An engine according to any one of claims 2 to 4, wherein the Hall effect thruster further includes an electric circuit (60) suitable for generating an electric field in the nozzle, and the electric circuit includes an anode (62) and a cathode (64) arranged respectively upstream and downstream from said airgap (28).

6. An engine according to claim 5, wherein the anode (62) comprises a portion of the nozzle (30).

7. An engine according to claim 5, wherein the anode (62) is arranged in the nozzle and is electrically insulated therefrom.

8. An engine according to any one of claims 2 to 7, **characterized in that**, axially at the level of the airgap (28), inner and outer walls (32, 34) of the nozzle are made of electrically insulating material, in particular of ceramic.

9. An engine according to any one of claims 1 to 8, **characterized in that** the nozzle presents a combustion chamber (36) at an upstream end, that is connected to a diverging portion (40) at a downstream end.

10. An engine according to claim 9, in which the Hall effect thruster further includes at least one particle injector (72), suitable for injecting particles into said combustion chamber (36).

11. A space device including at least one engine (1) according to any one of claims 1 to 10.
